# EUROPEAN PATENT APPLICATION

(11) **EP 2 338 858 A1**
(43) Date of publication of application: **29.06.2011**
(21) Application number: 10174473.8
(22) Date of filing: 30.08.2010
(51) Int. Cl.: C04B 35/447, C04B 38/00, B01D 46/24

(54) **Honeycomb structural body and manufacturing method of honeycomb structural body**

(30) Priority: 19.11.2009 WO PCT/JP2009/069658
(71) Applicant: IBIDEN CO., LTD., Ogaki-shi Gifu 503-8604 (JP)
(72) Inventor: Sato, Hiroki, Gifu 501-0695 (JP); Yoshida, Hikaru, Gifu 501-0695 (JP); Umemoto, Takehiro, Gifu 501-0695 (JP)
(74) Representative: HOFFMANN EITLE

(57) **Abstract**

A honeycomb structural body includes honeycomb units that are pillar-shaped and bound together. Each of the honeycomb units include plural cells extending from a first end face to a second end face in a longitudinal direction. The plural cells are partitioned by cell walls. The honeycomb units include phosphate-based zeolite and a second inorganic binder. The honeycomb units are interposed by mat members including a first inorganic fiber.

## Description

### BACKGROUND OF THE INVENTION

### 1. Field of the Invention

The present invention relates to a honeycomb structural body and a method of manufacturing a honeycomb structural body for treating exhaust gas.

### 2. Description of the Related Art

Many techniques have been developed for purifying (converting) exhaust gas that is discharged from automobiles. However, as the traffic volume is increasing, the conventional measures for countering exhaust gas are becoming insufficient. Both domestically and internationally, exhaust gas regulations are being increasingly intensified. Regulations on NOx in diesel exhaust gas are particularly being intensified. Conventionally, NOx has been reduced by controlling the engine's combustion system; however, this measure is becoming insufficient. In order to counter such problems, an NOx reduction system that is implemented by adding a urea aqueous solution (referred to as a urea SCR system) has been proposed as a diesel engine NOx conversion system. A honeycomb structural body is known as the catalyst carrier used in this system.

For example, a honeycomb structural body has plural cells (through holes) extending from one end face to the another end face of the honeycomb structural body in a longitudinal direction. These cells are partitioned from each other by cell walls supporting a catalyst. Accordingly, when exhaust gas flows through the honeycomb structural body, the NOx included in the exhaust gas is converted by the catalyst supported on the cell walls, and therefore the exhaust gas can be treated.

Generally, such a honeycomb structural body is formed with cordierite. Furthermore, the cell walls support a catalyst such as zeolite (that has undergone ion-exchange with iron, copper, or the like). The honeycomb structural body itself may be formed with zeolite (see, for example, patent document 1).

Furthermore, there is proposed a honeycomb structural body used as a catalyst carrier that is formed by joining together a predetermined number of honeycomb units by interposing adhesive layers, cutting the assembly of joined honeycomb units into a desired shape, and then applying a coat layer on the peripheral surface of the cut assembly (see, for example, patent document 2).
Patent document 1: Japanese Laid-Open Patent Application No. S61-171539
Patent document 2: International Publication 2005/1063653

Furthermore, in recent years, there is demand for honeycomb structural bodies with high NOx conversion efficiency. In order to increase the NOx conversion efficiency, there are discussions about using a substance called silico-aluminophosphate (SAPO) in the honeycomb structural body. SAPO is prepared by replacing Al ions and/or P ions of aluminophosphate that is a zeolite analog with Si⁴⁺ ions.

A honeycomb structural body including SAPO is considered to have high NOx conversion efficiency. However, SAPO is typically used as a material for a molecular sieve, and therefore it is clear that SAPO has high moisture absorbency and a property of absorbing a large amount of moisture. Furthermore, the volume of SAPO varies significantly according to absorption and desorption of moisture.

A honeycomb structural body was actually manufactured by joining together honeycomb units including SAPO, and the honeycomb structural body was left in the atmosphere. It was found that the honeycomb units in the honeycomb structural body contracted. Furthermore, when the volume of the honeycomb units changed significantly, cracks were formed in the adhesive layers joining together the honeycomb units. If many cracks occur, the binding force between the honeycomb units joined by the adhesive layers may decrease, and some of the honeycomb units may fall out due to the pressure of the exhaust gas.

### SUMMARY OF THE INVENTION

The present invention provides a honeycomb structural body and a method of manufacturing a honeycomb structural body, in which one or more of the above-described disadvantages are eliminated.

A preferred embodiment of the present invention provides a honeycomb structural body and a method of manufacturing a honeycomb structural body, in which the binding force between the honeycomb units is appropriately maintained even when the volume of the honeycomb units changes.

An embodiment of the present invention provides a honeycomb structural body including honeycomb units that are pillar-shaped and bound together, each of the honeycomb units including plural cells extending from a first end face to a second end face in a longitudinal direction, the plural cells being partitioned by cell walls, wherein the honeycomb units include phosphate-based zeolite and a second inorganic binder, and the honeycomb units are interposed by mat members including a first inorganic fiber.

In the honeycomb structural body according to an embodiment of the present invention, the first inorganic fiber included in the mat members may include at least one kind selected from a group consisting of alumina, silica, silica-alumina, and mullite.

In the honeycomb structural body according to an embodiment of the present invention, the mat members may have a gap bulk density (GBD) within a range of 0.2 g/cm³ through 0.6 g/cm³.

In the honeycomb structural body according to an embodiment of the present invention, the mat members may have surface pressure within a range of 0.3 MPa through 3.5 MPa.

In the honeycomb structural body according to an embodiment of the present invention, the phosphate-based zeolite may include at least one kind selected from a group consisting of SAPO, MeAPO, and MeAPSO.

The SAPO may include at least one kind selected from a group consisting of SAPO-5, SAPO-11, and SAPO-34.

In the honeycomb structural body according to an embodiment of the present invention, the phosphate-based zeolite may have undergone ion-exchange.

In the honeycomb structural body according to an embodiment of the present invention, the second inorganic binder may include at least one kind selected from a group consisting of alumina sol, silica sol, titania sol, liquid glass, sepiolite, attapulgite, and boehmite.

In the honeycomb structural body according to an embodiment of the present invention, the honeycomb units may further include a second inorganic fiber or inorganic flaky substances.

The second inorganic fiber included in the honeycomb units may include at least one kind selected from a group consisting of alumina, silica, silicon carbide, silica-alumina, glass, potassium titanate, and aluminum borate, and the inorganic flaky substances included in the honeycomb units may include at least one kind selected from a group consisting of glass flakes, mica flakes, alumina flakes, silica flakes, and zinc oxide flakes.

In the honeycomb structural body according to an embodiment of the present invention, the mat member including the first inorganic fiber may be disposed on a peripheral surface of the honeycomb units that are bound together.

An embodiment of the present invention provides a method of manufacturing a honeycomb structural body including honeycomb units that are pillar-shaped and bound together, each of the honeycomb units including plural cells extending from a first end face to a second end face in a longitudinal direction, the plural cells being partitioned by cell walls, the honeycomb units including phosphate-based zeolite and a second inorganic binder, the method including (a) a step of manufacturing honeycomb unit molded bodies having a predetermined shape; (b) a step of assembling the honeycomb unit molded bodies to form an assembly of the honeycomb unit molded bodies having the predetermined shape and interposing mat members including a first inorganic fiber between the honeycomb unit molded bodies; and (c) a step of firing the assembly of the honeycomb unit molded bodies.

In the method of manufacturing the honeycomb structural body according to an embodiment of the present invention, the step (b) may further include a step of disposing the mat member including the first inorganic fiber on a peripheral surface of the assembly of the honeycomb unit molded bodies.

An embodiment of the present invention provides a method of manufacturing a honeycomb structural body including honeycomb units that are pillar-shaped and bound together, each of the honeycomb units including plural cells extending from a first end face to a second end face in a longitudinal direction, the plural cells being partitioned by cell walls, the honeycomb units including phosphate-based zeolite and a second inorganic binder, the method including (a) a step of manufacturing honeycomb unit molded bodies having a predetermined shape; (b) a step of firing the honeycomb unit molded bodies to manufacture honeycomb unit fired bodies after the step (a); and (c) a step of assembling the honeycomb unit fired bodies to form an assembly of the honeycomb unit fired bodies having the predetermined shape and interposing mat members including the first inorganic fiber between the honeycomb unit fired bodies after the step (b).

In the method of manufacturing the honeycomb structural body according to an embodiment of the present invention, the step (c) may further include a step of disposing the mat member including the first inorganic fiber on a peripheral surface of the assembly of the honeycomb unit fired bodies.

In the method of manufacturing the honeycomb structural body according to an embodiment of the present invention, the phosphate-based zeolite may include at least one kind selected from a group consisting of SAPO, MeAPO, and MeAPSO.

The SAPO may include at least one kind selected from a group consisting of SAPO-5, SAPO-11, and SAPO-34.

An embodiment of the present invention provides the honeycomb structural body manufactured by any of the above methods.

According to one embodiment of the present invention, a honeycomb structural body and a method of manufacturing a honeycomb structural body are provided, in which the binding force between the honeycomb units is appropriately maintained even when the volume of the honeycomb units changes.

### BRIEF DESCRIPTION OF THE DRAWINGS

Other objects, features and advantages of the present invention will become more apparent from the following detailed description when read in conjunction with the accompanying drawings, in which:
FIG. 1 is a schematic perspective view of an example of a conventional honeycomb structural body;
FIG. 2 is an enlarged photograph of a cross-sectional view of honeycomb units forming a conventional honeycomb structural body, in which SAPO is used as the material of the honeycomb units;
FIG. 3 is a schematic perspective view of a honeycomb structural body according to an embodiment of the present invention;
FIG. 4 is a schematic perspective view of an example of a honeycomb unit that is a basic unit of the honeycomb structural body shown in FIG. 3;
FIG. 5 schematically illustrates a surface pressure measuring apparatus according to the present invention:
FIG. 6 is a schematic example flowchart of a method of manufacturing the honeycomb structural body according to an embodiment of the present invention;
FIG. 7 is a schematic cross-sectional view of an exhaust gas conversion apparatus including the honeycomb structural body according to example 1 of the present invention; and
FIG. 8 is a perspective view of the honeycomb structural body according to example 1 of the present invention.

### DETAILED DESCRIPTION OF THE PREFERRED EMBODIMENTS

A description is given, with reference to the accompanying drawings, of embodiments of the present invention.

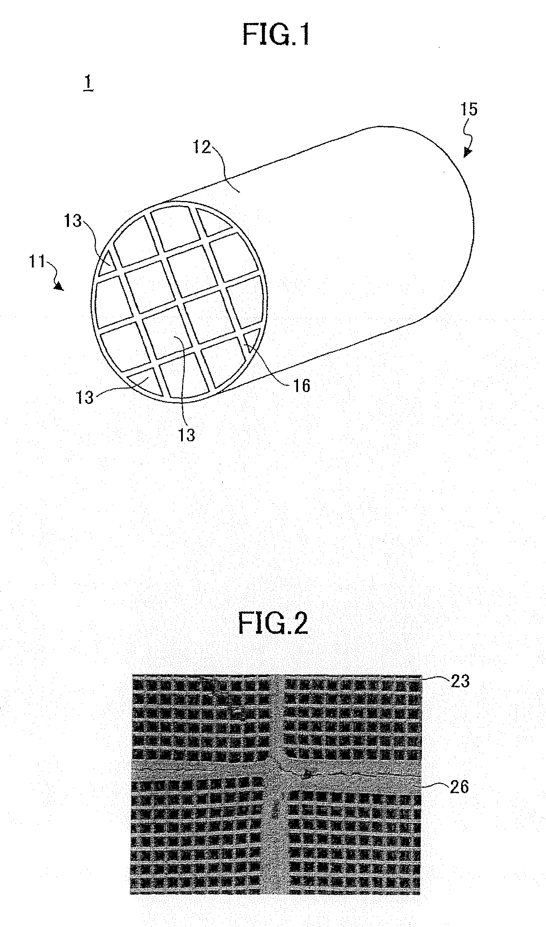

First, with reference to FIG. 1, a brief description is given of problems of a conventional honeycomb structural body in which SAPO (silico-aluminophosphate) is used as inorganic particles forming honeycomb units. FIG. 1 schematically illustrates an example of a conventional honeycomb structural body.

As shown in FIG. 1, a conventional honeycomb structural body 1 has two end faces 11 and 15. The peripheral surface of the conventional honeycomb structural body 1 is usually provided with a coat layer 12, except for the two end faces.

The conventional honeycomb structural body 1 is formed by joining together pillar-shaped honeycomb units 13 made of ceramics (the example shown in FIG. 1 includes four horizontal rows and four vertical rows, i.e., a total of 16 honeycomb units) by interposing adhesive layers 16. Then, the periphery is cut into a predetermined shape (a cylindrical shape in the example shown in FIG. 1).

Each of the honeycomb units 13 has plural cells (through holes) that are open at both end faces, and that extend in a longitudinal direction from one end to the another end of the honeycomb unit 13. Furthermore, the cells are partitioned by cell walls. In such a conventional honeycomb structural body, cracks did not occur in the adhesive layers 16.

However, in order to improve the NOx conversion efficiency, a honeycomb structural body has been manufactured by using SAPO (silico-aluminophosphate) in the honeycomb units, instead of using the inorganic particles included in honeycomb units 13 of the above conventional honeycomb structural body 1. Such honeycomb units 23 (see FIG. 2) include SAPO (silico-aluminophosphate) that functions as a catalyst for NOx conversion reaction. Therefore, when exhaust gas flows through the honeycomb structural body including these honeycomb units 23, the NOx in the exhaust gas is converted by the catalyst function of SAPO. Accordingly, such a honeycomb structural body used as a catalyst carrier for NOx conversion has high NOx conversion efficiency.

However, the SAPO included in the honeycomb units 23 forming the honeycomb structural body is typically used as a material for a molecular sieve, and thus has high moisture absorbency and a property of absorbing a large amount of moisture. Furthermore, it has been found that the volume of SAPO varies significantly according to absorption and desorption of moisture.

When a honeycomb structural body formed with the honeycomb units 23 including SAPO is left in the atmosphere, the honeycomb units 23 in the honeycomb structural body will contract. Furthermore, it has been found that when the volume of the honeycomb units changes significantly, cracks may occur in adhesive layers 26 joining together the honeycomb units 23, or the adhesive layers 26 may break. If large cracks occur in the adhesive layers 26 and the adhesive layers 26 break, the joining force between adjacent honeycomb units 23 may decrease, and some of the honeycomb units 23 may fall out due to the pressure of the exhaust gas.

FIG. 2 is an enlarged photograph of a cross-sectional view of the honeycomb units 23 forming a conventional honeycomb structural body, in which SAPO (silico-aluminophosphate) is used as the material of the honeycomb units 23.

As shown in FIG. 2, the thick white parts extending vertically and horizontally from the center in a cross shape are the adhesive layers 26. The parts divided by the adhesive layers 26, i.e., the top left part, the bottom left part, the top right part, and the bottom right part are separate honeycomb units 23 made of SAPO (silico-aluminophosphate). Furthermore, cell walls (thin white parts) and cells (black parts) of the honeycomb units 23 are shown in FIG. 2. Moreover, as shown in FIG. 2, plural cracks extending in the horizontal direction occur in the adhesive layer 26 caused by changes in volume of the honeycomb units 23 due to the absorption and desorption of moisture by the honeycomb units 23.

The cracks that have occurred in the adhesive layers 26 are considered to be attributed to changes in the volume of the honeycomb units 23 due to absorption and desorption of moisture, such that stress is applied to the adhesive layers 26. Thus, it has been found that cracks may occur when the honeycomb units 23 absorb moisture or when the honeycomb units 23 dry, regardless of whether the honeycomb structural body is being used or not. The enlarged photograph of the cross-sectional view of the honeycomb units 23 was taken before using the honeycomb structural body, when the honeycomb units 23 absorbed moisture and cracks occurred.

Meanwhile, a honeycomb structural body according to an embodiment of the present invention includes plural pillar-shaped honeycomb units that are bound together. Each of the honeycomb units includes plural perforating cells extending from a first end face to a second end face in a longitudinal direction, and the perforating cells are partitioned by cell walls. The honeycomb units include phosphate-based zeolite and a second inorganic binder, and mat members including first inorganic fiber are interposed between the honeycomb units.

In the honeycomb structural body according to an embodiment of the present invention, the honeycomb units are not joined together by an adhesion method involving adhesive layers (i.e., drying and solidifying an adhesive paste) as in conventional cases. Thus, with the honeycomb structural body according to an embodiment of the present invention, the problems of cracks in the adhesive layers and damaged adhesive layers will not arise, even if the honeycomb units include SAPO or the like and the honeycomb units significantly change in volume due to absorption or desorption of moisture.

Furthermore, in the honeycomb structural body according to an embodiment of the present invention, mat members made of first inorganic fiber are interposed between the honeycomb units. The mat members have flexibility (absorb stress), and therefore even when the volume of the honeycomb units change significantly due to absorption and desorption of moisture, the mat members can deform in accordance with the change in volume.

Therefore, in the honeycomb structural body according to an embodiment of the present invention, an appropriate binding force is maintained between the honeycomb units even when the volume of the honeycomb units changes significantly due to absorption and desorption of moisture by the honeycomb units. Accordingly, the honeycomb units are prevented from falling out due to pressure of the exhaust gas.

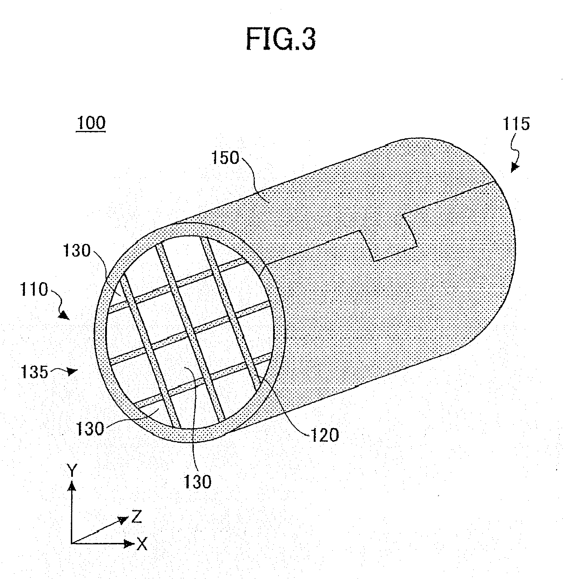

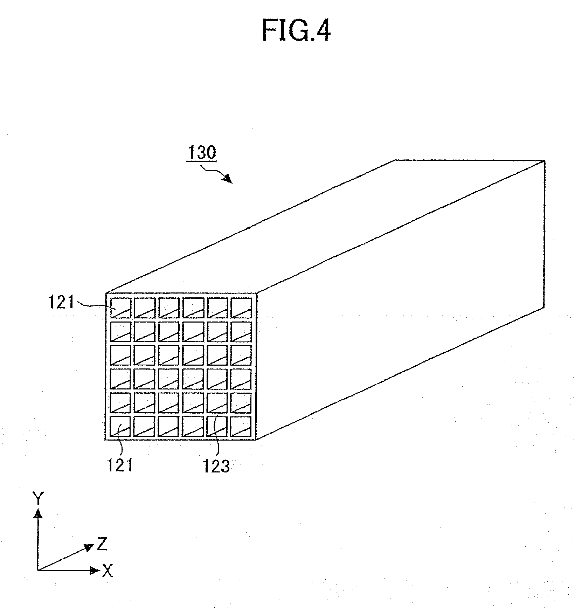

Next, with reference to FIGS. 3 and 4, a detailed description is given of the honeycomb structural body according to an embodiment of the present invention.

FIG. 3 schematically illustrates a honeycomb structural body according to an embodiment of the present invention. FIG. 4 illustrates an example of a honeycomb unit that is a basic unit of the honeycomb structural body shown in FIG. 3.

As shown in FIG. 3, a honeycomb structural body 100 includes two end faces 110 and 115.

The following describes an example of how the honeycomb structural body 100 is formed. FIG. 4 illustrates a pillar-shaped honeycomb unit 130 made of ceramics. Plural honeycomb units 130 (the example shown in FIG. 3 includes four horizontal rows and four vertical rows, i.e., a total of 16 honeycomb units) are stacked onto one another by interposing mat members 120 that are made of first inorganic fiber, so as to form an assembly 135. Then, the periphery of the assembly 135 is cut into a predetermined shape (a cylindrical shape in the example shown in FIG. 3).

The mat member 120 does not have an adhesive function by itself. Therefore, various measures may be taken to prevent the honeycomb units 130 from separating from each other while being handled. For example, as shown in FIG. 3, a peripheral mat member 150 made of first inorganic fiber may be wound around the peripheral surface of the assembly 135, and the peripheral mat member 150 may be fixed with tape or the like, so that the honeycomb units 130 are bound together. In another example, an adhesive may be applied on the mat members 120 so that the honeycomb units 130 are fixed to each other. In yet another example, double-sided adhesive tape may be interposed between the mat members 120 and the honeycomb units 130 so that the honeycomb units 130 are fixed to each other. In yet another example, the honeycomb units 130 interposed by the mat members 120 may be bound together by a ring made of metal (e.g., stainless steel), wire (made of, e.g., stainless steel), or the like. In yet another example, the peripheral mat member 150 may be wound around the assembly 135 and the peripheral mat member 150 may be fixed to the assembly 135 with a metal ring, wire, or the like.

In yet another example, the peripheral mat member 150 may be wound around the assembly 135 and the peripheral mat member 150 may be fixed to the assembly 135 by canning the assembly 135 in a metal shell.

It is obvious that any other measure may be taken for preventing the honeycomb units 130 from separating from each other while being handled.

The peripheral mat member 150 has a protruded part at one edge and a recessed part at the other edge. When the peripheral mat member 150 is wound around the assembly 135 of the honeycomb units 130, the protruded part and the recessed part are interlocked. In other examples, the edges of the peripheral mat member 150 may be straight lines or any other kind of shape.

The honeycomb structural body shown in FIG. 3 includes four assemblies 135 each including four honeycomb units 130 interposed by the mat members 120. The four assemblies 135 of honeycomb units 130 are interposed by three mat members 120.

In another example, one mat member 120 may be interposed between adjacent honeycomb units 130 (i.e., in the case of FIG. 3, 24 mat members 120 would be disposed). The mat members 120 may be disposed between the honeycomb units 130 in any manner; there may be a space between honeycomb units 130 that is not interposed by a mat member 120.

As shown in FIG. 4, the honeycomb unit 130 has plural cells (through holes) 121 that are open at both end faces, and that extend in a longitudinal direction from one end to the another end of the honeycomb unit 130. Furthermore, the cells 121 are partitioned by cell walls 123. A cross-sectional shape perpendicular to the longitudinal direction of the cell 121 (Z direction) is a substantially square shape.

The honeycomb unit 130 includes so-called phosphate-based zeolite such as SAPO that functions as a catalyst for NOx conversion reaction.

The phosphate-based zeolite includes aluminophosphate (AlPO₄); SAPO (silico-aluminophosphate) that is obtained by replacing some of the Al ions and/or P ions with Si⁴⁺ ions; MeAPO that is obtained by replacing some of the Al³⁺ ions in aluminophosphate (AlPO₄) with a metal cation Meⁿ⁺; and MeAPSO that is obtained by replacing some of the Si⁴⁺ ions of SAPO with a metal cation Meⁿ⁺. SAPO is preferably SAPO-5, SAPO-11, SAPO-34, or the like. SAPO may be ion-exchanged by Fe, Cu, Ni, Co, Zn, Mn, Ti, AG, V, or the like. The metal cation Meⁿ⁺ of MeAPO and MeAPSO may be ions of Ti, Mg, Fe, Mn, Co, Zn, or the like, or may also be ion-exchanged.

As described above, phosphate-based zeolite such as SAPO has a property of changing in volume by absorbing moisture or by drying. However, in the present invention, the honeycomb units 130 are not fixed to each other with adhesive layers (formed by drying and solidifying an adhesive paste) as in the conventional technology. In the present invention, the honeycomb units 130 are interposed by the mat members 120 having flexibility (absorb stress). According to this feature, in the present invention, an appropriate binding force is maintained between the honeycomb units 130 even when the volume of the honeycomb units 130 changes significantly due to absorption and desorption of moisture by the honeycomb units 130. Accordingly, the above-described problems of the conventional technology may be prevented.

The mat member 120 and the peripheral mat member 150 (if provided) (hereinafter, may be collectively referred to as "a mat member (120, 150)") include first organic binder in addition to first inorganic fiber.

The first inorganic fiber included in the mat member is preferably a fiber such as alumina, silica, silica-alumina, or mullite. The first organic binder included in the mat member may be epoxy resin, acrylic resin, rubber resin, styrene resin, or the like, preferably acrylic (ACM) resin, acrylonitrile-butadiene rubber (NBR), styrenebutadiene rubber (SBR), or the like. The mat member may further include first inorganic binder. The first inorganic binder is preferably alumina sol, silica sol, or the like.

The mat member 120, 150 may be manufactured by a process such as a needle process or a paper making process. Methods of manufacturing a mat member made of first inorganic fiber are widely known to those skilled in the art, and are thus not further described.

The surface pressure of the mat member 120, 150 is preferably within a range of 0.3 MPa through 3.5 MPa.

The surface pressure of the mat member 120, 150 is a value measured by the following method.

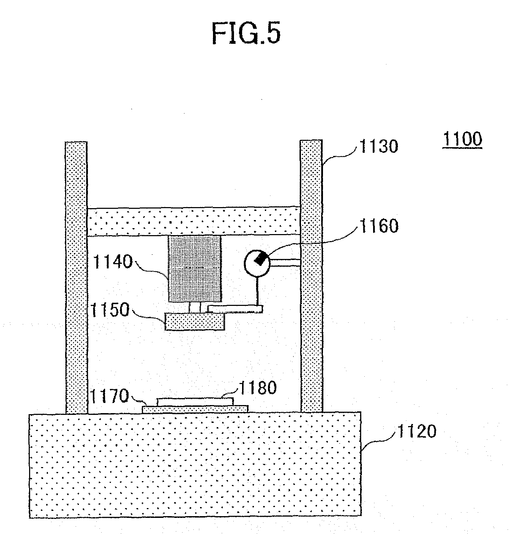

FIG. 5 illustrates a surface pressure measuring apparatus 1100 for measuring the surface pressure of the mat member 120 according to the present invention. The surface pressure measuring apparatus 1100 includes gate-type pillars 1130 and a substantially horizontal sample holding board 1120. A load resent function is provided at the center of the surface pressure measuring apparatus 1100 (above the sample holding board 1120), including a cross head 1140 that moves up and down. A top part pressing plate 1150 made of stainless steel is disposed on the bottom side of the cross head 1140. A displacement gauge 1160 is attached to the top part pressing plate 1150. A bottom part receiving plate 1170 made of stainless steel is disposed on the sample holding board 1120. When performing a test, a sample 1180 of the mat member 120 whose weight is known is placed on the surface of the bottom part receiving plate 1170.

The following method is performed to measure the surface pressure with the use of the surface pressure measuring apparatus 1100. First, the cross head 1140 is lowered in advance, so that there is only a small gap between the sample 1180 and the top part pressing plate 1150. From this state, the cross head 1140 is lowered at 1 mm/sec. to compress the sample 1180. When the gap bulk density (hereinafter, "GBD") of the sample 1180 becomes a predetermined value (for example, 0.35g/cm³), the load on the sample 1180 is measured.

The GBD of the sample 1180 is obtained as follows. First, the load on the sample 1180 is calculated as follows.
(weight of sample 1180)/(area of sample 1180)/(gap between top part pressing plate 1150 and bottom part receiving plate 1170)
Then, the obtained load is divided by the area of the sample 1180 to obtain the surface pressure (kPa).

The same method is applicable for measuring the surface pressure of the mat member 150.

When the surface pressure of the mat member 120, 150 is less than 0.3 MPa, the honeycomb units 130 may fall out while handling or using the honeycomb structural body 100. Meanwhile, when the surface pressure of the mat member 120, 150 exceeds 3.3 MPa, the honeycomb units 130 may break.

The GBD of the mat member 120, 150 is preferably within a range of 0.2 g/cm³ through 0.6 g/cm³, more preferably within a range of 0.3 g/cm³ through 0.5 g/cm³.

The thickness of the mat member 120, 150 is within a range of 1 mm through 10 mm, more preferably within a range of 2 mm through 5 mm.

The thickness of the mat member 120, 150 by itself or the thickness of the mat member 120, 150 when the honeycomb units 130 are bound together is preferably within a range of 1 mm through 5 mm.

The honeycomb structural body 100 having the above configuration may be used as a catalyst carrier in a urea SCR system having a urea tank. When exhaust gas flows through the urea SCR system, the urea in a urea tank reacts to the water in the exhaust gas, and ammonia is generated (formula (1)).

CO(NH₂)₂+H₂O→2NH₃+CO₂ formula (1)

When the generated ammonia flows into the cells together with the exhaust gas including NOx from one of the end faces of the honeycomb structural body 100 (for example, the end face 110), the reactions expressed by formula (2-1) and formula (2-2) occur due to the function of the catalyst in the phosphate-based zeolite included in the cell walls.

4NH₃+4NO+O₂→4N₂6H₂O formula (2-1)

8NH₃+6NO₂→7N₂12H₂O formula (2-2)

Then, the exhaust gas that has been converted is discharged from the another end face of the honeycomb structural body 100 (for example, the end face 115). As described above, by making the exhaust gas flow through the honeycomb structural body 100, the NOx in the exhaust gas can be treated.

### (Configuration of honeycomb structural body)

A detailed description is given of the honeycomb structural body 100 according to an embodiment of the present invention.

### (Honeycomb unit 130)

The following describes the honeycomb unit 130 that is made of a material that primarily includes SAPO.

The honeycomb unit 130 forming the honeycomb structural body 100 includes a second inorganic binder in addition to SAPO (phosphate-based zeolite). Furthermore, the honeycomb unit 130 may include inorganic particles other than SAPO and/or second inorganic fiber and/or inorganic flaky substances.

Examples of the second inorganic binder in the honeycomb unit 130 are alumina sol, silica sol, titania sol, liquid glass, white clay, kaolin, montmorillonite, sepiolite, attapulgite, boehmite, or the like. These can be used alone or in combination.

The second inorganic binder is preferably at least one kind selected from a group consisting of alumina sol, silica sol, titania sol, liquid glass, sepiolite, attapulgite, and boehmite.

The honeycomb unit preferably includes second inorganic fiber and/or inorganic flaky substances as a reinforcement material.

When the second inorganic fiber is added to the honeycomb unit, the material of the second inorganic fiber is preferably at least one kind selected from a group consisting of alumina, silica, silicon carbide, silica-alumina, glass, potassium titanate, aluminum borate and the like. These can be used alone or in combination. The second inorganic fiber is more preferably alumina.

An inorganic flaky substance is different from inorganic fiber. The inorganic flaky substance is an inorganic additive that has a flaky shape. The inorganic flaky substance preferably has a thickness within a range of 0.2 µm through 5 µm, a maximum length within a range of 10 µm through 160 µm, and an aspect ratio (thickness/maximum length) within a range of 3 through 250. The thickness and the maximum length of the inorganic flaky substance are average values obtained from SEM photographs. The thickness of the inorganic flaky substance is the average value obtained from twenty inorganic flaky substances. The maximum length of the inorganic flaky substance is the average value obtained from twenty inorganic flaky substances, based on a maximum diameter when the inorganic flaky substance is approximated to a flat particle.

The inorganic flaky substances included in the honeycomb unit are preferably at least one kind selected from a group consisting of glass flakes, mica flakes, alumina flakes, silica flakes, zinc oxide flakes, or the like.

The widths of the inorganic flaky substances tend to be randomly arranged in a direction perpendicular to the longitudinal direction in the honeycomb unit. Therefore, compared to the case of adding second inorganic fiber, the strength of the honeycomb unit is less dependent on a particular direction, and the strength in a direction perpendicular to the longitudinal direction of the honeycomb unit is improved.

The lower limit of the amount of inorganic particles (phosphate-based zeolite such as SAPO) included in a honeycomb unit is preferably 30 wt%, more preferably 40 wt%, and still more preferably 50 wt%. Meanwhile, the preferable upper limit is 90 wt%, more preferably 80 wt%, and still more preferably 75 wt%. If the content of inorganic particles (phosphate-based zeolite such as SAPO) is less than 30 wt%, the amount of inorganic particles that can contribute to converting NOₓ may become relatively small. Meanwhile, if the content of inorganic particles (phosphate-based zeolite such as SAPO) exceeds 90 wt%, the strength of the honeycomb unit may be reduced.

The amount of the second inorganic binder included in a honeycomb unit as solids content is preferably more than or equal to 5 wt%, more preferably more than or equal to 10 wt%, and still more preferably more than or equal to 15 wt%. Meanwhile, the amount of the second inorganic binder included in a honeycomb unit as solids content is preferably less than or equal to 50 wt%, more preferably less than or equal to 40 wt%, and still more preferably less than or equal to 35 wt%. If the content of the second inorganic binder as solids content is less than 5 wt%, the strength of the manufactured honeycomb unit may be reduced. Meanwhile, if the content of the second inorganic binder as solids content exceeds 50 wt%, the moldability of the raw material composition may be degraded.

When a honeycomb unit includes second inorganic fiber and inorganic flaky substances, the lower limit of the total amount of second inorganic fiber and inorganic flaky substances in a honeycomb unit is preferably 3 wt%, more preferably 5 wt%, and still more preferably 8 wt%. Meanwhile, the preferable upper limit is 50 wt%, more preferably 40 wt%, and still more preferably 30 wt%. If the total amount of second inorganic fiber and inorganic flaky substances is less than 3 wt%, the amount of second inorganic fiber and inorganic flaky substances contributing to improve the strength of the honeycomb unit is insufficient. Meanwhile, if the total amount of second inorganic fiber and inorganic flaky substances exceeds 50 wt%, the amount of SAPO (phosphate-based zeolite) that can contribute to converting NOₓ may become relatively small.

The cell density of the honeycomb unit 130 is preferably within a range of 15.5 cells/cm² through 186 cells/cm² (100 cpsi through 1,200 cpsi), more preferably within a range of 46.5 cells/cm² through 170 cells/cm² (300 cpsi through 1,100 cpsi), and still more preferably within a range of 62.0 cells/cm² through 155 cells/cm² (400 cpsi through 1,000 cpsi).

The thickness of the cell walls 123 of the honeycomb unit 130 is not particularly limited; however, the preferable lower limit is 0.1 mm in consideration of the strength, and the preferable upper limit is 0.4 mm in consideration of NOx conversion performance.

Although not shown in FIG. 3, the honeycomb structural body 100 may have a coat layer on its peripheral surface. When the honeycomb structural body 100 has the peripheral mat member 150, the coat layer may be provided between the honeycomb unit assembly 135 and the peripheral mat member 150.

The coat layer is made of a raw material including the same inorganic particles, second inorganic binder, second inorganic fiber and/or inorganic flaky substances as those included in the material forming the honeycomb unit 130, and also including a paste including a second organic binder. The final thickness of the coat layer is preferably 0.1 mm through 2.0 mm.

### (Manufacturing method of honeycomb structural body)

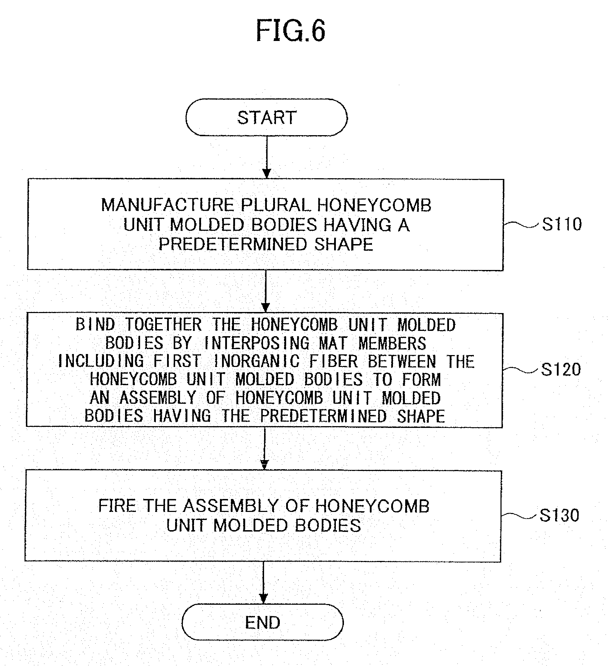

Next, with reference to FIG. 6, a description is given of an example of a method of manufacturing the honeycomb structural body 100 according to an embodiment of the present invention. FIG. 6 is an example flowchart of a method of manufacturing the honeycomb structural body 100 according to an embodiment of the present invention.

As shown in FIG. 6, the method of manufacturing the honeycomb structural body 100 according to an embodiment of the present invention includes a step of manufacturing plural honeycomb unit molded bodies having a predetermined shape (step S110), a step of binding together the honeycomb unit molded bodies by interposing mat members including first inorganic fiber between the honeycomb unit molded bodies to form an assembly of honeycomb unit molded bodies having a predetermined shape (step S120), and a step of firing the assembly of honeycomb unit molded bodies (step S130).

Details of each of the above steps are given below.

### (Step S110)

First, plural honeycomb unit molded bodies having a predetermined shape are manufactured by extruding the molded bodies from a raw material paste. The raw material paste primarily includes inorganic particles including SAPO (phosphate-based zeolite) and a second inorganic binder. A second inorganic fiber or the like may be added to the raw material paste according to need.

The honeycomb unit molded bodies have a pillar shape as shown in FIG. 4. Alternatively, the honeycomb unit molded bodies may be shaped such that a cylindrical shape is formed when they are bound together in an assembly. In this case, the procedure of processing the periphery of the assembly of honeycomb unit molded bodies in step S120 may be eliminated.

Other than the above components, a second organic binder, a dispersion medium, and a molding aid may be appropriately added to the raw material paste, according to the moldability. As the second organic binder, one or more organic binders may be selected from methylcellulose, carboxyl methylcellulose, hydroxyethylcellulose, polyethylene glycol, phenolic plastic, epoxy resin, or the like, although not particularly limited thereto. The blending quantity of the second organic binder is preferably 1 part by weight through 10 parts by weight with respect to a total of 100 parts by weight of inorganic particles, a second inorganic binder, second inorganic fiber, and inorganic flaky substances.

Examples of the dispersion medium are water, an organic solvent (e.g., benzene), alcohol (methanol) and the like, although not particularly limited thereto. Examples of the molding aid are ethylene glycol, dextrin, fatty acid, fatty acid soap, polyalcohol and the like, although not particularly limited thereto.

The raw material paste is preferably mixed by using a mixer, an attritor or the like to mix it, and is also preferably kneaded by using a kneader or the like to sufficiently knead it, although not particularly limited thereto. For example, an extrusion molding method is a preferable method for molding the raw material paste into a shape having cells, although the method is not particularly limited thereto.

The resultant honeycomb unit molded body may be dried. Examples of a drying apparatus used for the drying process are a microwave drying apparatus, a hot air drying apparatus, a dielectric drying apparatus, a suction drying apparatus, a vacuum drying apparatus, a freeze drying apparatus and the like, although not particularly limited thereto.

### (Step S120)

Next, an assembly of the honeycomb unit molded bodies having a desired size (for example, four horizontal rows and four vertical rows of honeycomb units) is formed by combining together the honeycomb unit molded bodies formed by step S110. Adjacent honeycomb unit molded bodies are interposed by mat members including first inorganic fiber.

Various measures may be taken to prevent the honeycomb unit molded bodies included in the assembly from separating from each other while being handled. For example, a fastening means such as a ring, a string, or a band may be wound around the peripheral surface of the assembly of honeycomb unit molded bodies, so that the honeycomb unit molded bodies are bound together. In another example, an adhesive may be applied on the mat members so that the honeycomb unit molded bodies are fixed to each other. Furthermore, an adhesive may be applied to the joining surfaces of the honeycomb unit molded bodies, so that the honeycomb unit molded bodies are provisionally fixed to each other by interposing mat members. The fastening means such as a ring, a string, or a band is preferably made of metal, such as stainless steel, copper, nickel aluminum, or iron, preferably stainless steel. The fastening means is preferably disposed at two locations near either end of the assembly of the honeycomb unit molded bodies; however, the fastening means may be disposed at one location or three or more locations.

Next, a diamond cutter is used to process the assembly of honeycomb unit molded bodies into predetermined shape (for example, a cylindrical shape). However, as described above, the honeycomb unit molded bodies may be shaped such that the desired shape is formed when they are bound together in an assembly. In this case, the procedure of processing the assembly of honeycomb unit molded bodies may be eliminated.

Subsequently, a mat member made of first inorganic fiber may be disposed on the processed peripheral surface of the assembly.

Furthermore, a coat layer may be applied on the processed peripheral surface of the assembly, according to need.

To apply a coat layer, a paste for coat layer is applied to the peripheral surface (processed surface) of the assembly, and the paste for coat layer is dried and solidified.

When a coat layer is applied, after applying the coat layer, the mat member for the periphery (hereinafter, "periphery mat member") is disposed on the peripheral surface of the assembly (i.e., the surface of the coat layer).

Typically, when the honeycomb unit molded bodies are fired, the second organic binder disappears, and consequently the strength of the honeycomb units is reduced. However, with the method according to an embodiment of the present invention, the honeycomb unit molded bodies may be handled (e.g., assembled) while they include the second organic binder. Therefore, with the method according to an embodiment of the present invention, the operation of assembling the honeycomb unit molded bodies can be reliably performed.

### (Step S130)

Next, the assembly of the honeycomb unit molded bodies is fired. The firing condition is preferably 600 °C through 1,200 °C, more preferably 600 °C through 1,000 °C, although this depends on the composition of the honeycomb unit molded bodies.

By performing the above procedures, the honeycomb structural body according to an embodiment of the present invention is manufactured.

When the mat member is disposed on the periphery, the process of firing the honeycomb unit molded bodies at step S130 may be performed after the mat member has been disposed on the periphery of the honeycomb unit molded bodies formed at step S120 and the mat member on the periphery has been fasted.

In another example, the mat member may be disposed on the periphery after performing the process of firing the honeycomb unit molded bodies (step S130).

The above-described method according to an embodiment of the present invention includes a step (step S110) of manufacturing plural honeycomb unit molded bodies having a predetermined shape; a step (step S120) of assembling the honeycomb unit molded bodies to form an assembly of the plural honeycomb unit molded bodies having a predetermined shape, where the honeycomb unit molded bodies are interposed by mat members including first inorganic fiber; and a step (step S130) of firing the assembly of honeycomb unit molded bodies.

However, the present invention is not limited to the above embodiment.

For example, instead of steps S120 and S130, the method may include (d) a step of firing the honeycomb unit molded bodies after step S110 to manufacture honeycomb unit fired bodies; and (e) a step of assembling the honeycomb unit fired bodies after step (d) to form an assembly of honeycomb unit fired bodies of a predetermined shape, where the honeycomb unit fired bodies are interposed by mat members including first inorganic fiber.

Step (e) may further include a step of disposing a mat member including first inorganic fiber on the peripheral surface of the assembly of honeycomb unit fired bodies.

The mat member usually includes a first organic binder. Thus, when the assembly of honeycomb units (honeycomb unit fired bodies) is formed after firing the honeycomb units, the mat members may be subjected to a degreasing process.

In the method of forming the assembly with honeycomb unit molded bodies (instead of forming the assembly after firing the honeycomb unit molded bodies), the process of degreasing the mat members and the process of firing the assembly can be performed at once. This method of forming a honeycomb structural body is simpler and requires less cost.

As described above, with the method of manufacturing a honeycomb structural body according to an embodiment of the present invention, the binding force between the honeycomb units is appropriately maintained even when the volume of the honeycomb units changes.

### [Examples]

In the following, the present invention is described in detail with examples.

### (Example 1)

A mixed composition was obtained by mixing together and kneading 41 wt% of SAPO particles (average particle size 2 µm) that have undergone ion-exchange with Cu, 6.4 wt% of alumina fiber, 11.8 wt% of an inorganic binder (boehmite), 5.0 wt% of an organic binder (methylcellulose), 3.7 wt% of a lubricant (olein acid), and 32.1 wt% of ion-exchange water. Next, four honeycomb unit molded bodies of a quarter sector shape having a radius of 68 mm were extruded from the mixed composition with an extrusion molding apparatus.

Next, the honeycomb unit molded bodies were sufficiently dried with the use of a microwave drying apparatus and a hot air drying apparatus.

Next, the dried honeycomb unit molded bodies were fired at 700°C for two hours, and honeycomb unit fired bodies were obtained.

Next, the four honeycomb unit fired bodies were assembled to form an assembly of honeycomb unit fired bodies having a cylindrical shape and a length of 100 mm. The honeycomb unit fired bodies were interposed by mat members having a thickness of 5 mm (hereinafter, "interposing mat members"). The outer diameter of the assembly of honeycomb unit fired bodies was 143.8 mm.

The interposing mat members included alumina-silica fiber and an organic binder (latex).

The periphery mat member was wound around the entire peripheral surface of the assembly of honeycomb unit fired bodies. The periphery mat member was the same as the interposing mat members.

The assembly of honeycomb unit fired bodies was placed in a metal case and was degreased at 400 °C for one hour. Accordingly, an exhaust gas conversion apparatus including the honeycomb structural body according to example 1 was manufactured.

The gap bulk density (GBD) of the interposing mat members and the periphery mat member was 0.4 g/cm³.

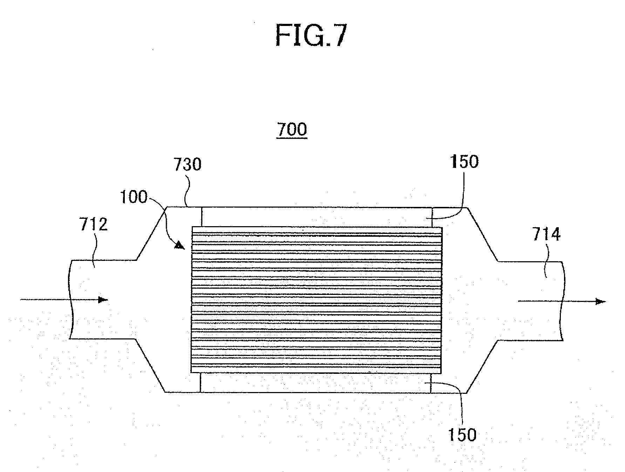

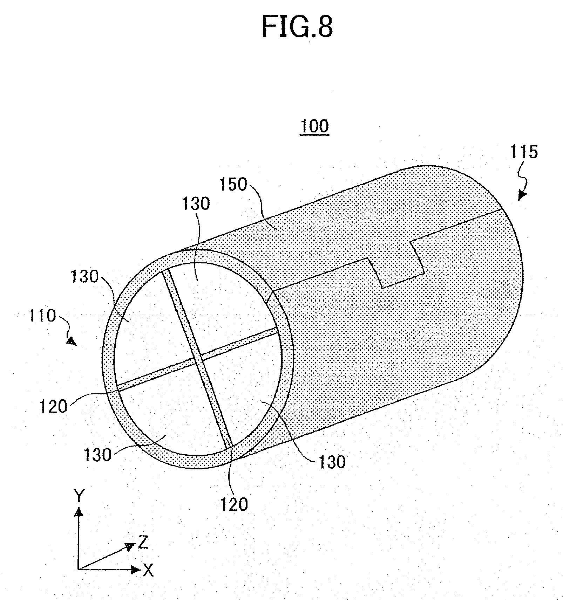

FIG. 7 is a cross-sectional view of an exhaust gas conversion apparatus 700 including the honeycomb structural body according to example 1. FIG. 8 is a perspective view of the honeycomb structural body included in the exhaust gas conversion apparatus. In FIGS. 7 and 8, elements corresponding to those in FIG. 3 are denoted by the same reference numerals and are not further described.

As shown in FIG. 7, the exhaust gas conversion apparatus 700 includes a metal case 730 accommodating the honeycomb structural body 100. The metal case 730 has an exhaust gas inlet 712 and an exhaust gas outlet 714. As shown in FIG. 8, the honeycomb structural body 100 according to example 1 is different from the honeycomb structural body shown in FIG. 3 in that it includes four honeycomb units 130 (instead of 16 honeycomb units 130 as in FIG. 3).

### (Example 2)

A mixed composition was obtained by mixing together and kneading 41 wt% of SAPO particles (average particle size 2 µm) that have undergone ion-exchange with Cu, 6.4 wt% of alumina fiber, 11.8 wt% of an inorganic binder (boehmite), 5.0 wt% of an organic binder (methylcellulose), 3.7 wt% of a lubricant (olein acid), and 32.1 wt% of ion-exchange water. Next, four honeycomb unit molded bodies of a quarter sector shape having a radius of 68 mm were extruded from the mixed composition with an extrusion molding apparatus.

The length of the honeycomb unit molded bodies was 100 mm.

Next, the honeycomb unit molded bodies were sufficiently dried with the use of a microwave drying apparatus and a hot air drying apparatus.

Next, the four honeycomb unit molded bodies were assembled to form an assembly of honeycomb unit molded bodies having a cylindrical shape and a length of 100 mm. The honeycomb unit molded bodies were interposed by interposing mat members having a thickness of 5 mm. The outer diameter of the assembly of honeycomb unit molded bodies was 143.8 mm.

The interposing mat members included alumina-silica fiber and an organic binder (latex).

The periphery mat member was wound around the entire peripheral surface of the assembly of honeycomb unit molded bodies. The periphery mat member was the same as the interposing mat members.

The assembly of honeycomb unit molded bodies was placed in a metal case and was fired at 700 °C for two hours. Accordingly, an exhaust gas conversion apparatus including the honeycomb structural body according to example 2 was manufactured (see FIGS. 7 and 8).

The honeycomb units (fired honeycomb units) in the honeycomb structural body had cell walls 123 having a thickness of 0.25 mm. The cell density was 93 cells/ cm².

The gap bulk density (GBD) of the interposing mat members and the periphery mat member was 0.4 g/cm³.

### (Example 3)

An exhaust gas conversion apparatus including a honeycomb structural body according to example 3 was manufactured by the same method as example 2. However, in example 3, when forming the assembly of honeycomb unit molded bodies by assembling the four honeycomb unit molded bodies and the interposing mat members, double-sided adhesive tape was disposed on parts of the honeycomb unit molded bodies that contact the interposing mat members, to provisionally fix the honeycomb unit molded bodies to the interposing mat members. Furthermore, wire was wound around the peripheral surface of the assembly of honeycomb unit molded bodies (i.e., the surface of the periphery mat member), to fix the honeycomb unit molded bodies and the interposing mat members to each other. Other conditions were the same as those of example 2.

### (Example 4)

An exhaust gas conversion apparatus including a honeycomb structural body according to example 4 was manufactured by the same method as example 2. However, in example 4, when forming the assembly of honeycomb unit molded bodies by assembling the four honeycomb unit molded bodies and the interposing mat members, an inorganic adhesive that is 0.5 mm in thickness was applied to the parts of the honeycomb unit molded bodies that contact the interposing mat members, to provisionally fix the honeycomb unit molded bodies to the interposing mat members. The inorganic adhesive was made of zeolite and silica sol. Furthermore, the thickness of the interposing mat members was 4 mm. Other conditions were the same as those of example 2.

### (Example 5)

An exhaust gas conversion apparatus including a honeycomb structural body according to example 5 was manufactured by the same method as example 2 (see FIG. 3). However, in example 5, instead of forming four honeycomb unit molded bodies having a quarter sector shape, 16 honeycomb unit molded bodies shaped as square pillars were formed by the extruding method. Each of the honeycomb unit molded bodies had a height, width, and length of 34.3 mm, 34.3 mm, and 100 mm, respectively.

Furthermore, the peripheral surface of the assembly of honeycomb unit molded bodies was processed with a diamond cutter, so that an assembly of honeycomb unit molded bodies having a cylindrical shape and an outer diameter of 143.8 mm was formed. Furthermore, the periphery mat member was wound around the peripheral surface. The periphery mat member was the same as the interposing mat members. Other conditions were the same as those of example 2. The thickness of the cell walls 123 was 0.2 mm. The cell width was 0.69 mm. The aperture ratio of the honeycomb unit molded bodies was 60 %. The cell density was 124 cells/ cm².

### (Example 6)

An exhaust gas conversion apparatus including a honeycomb structural body according to example 6 was manufactured by the same method as example 1. However, in example 6, the gap bulk density (GBD) of the interposing mat members and the periphery mat member was 0.3 g/cm³:

### (Example 7)

An exhaust gas conversion apparatus including a honeycomb structural body according to example 7 was manufactured by the same method as example 1. However, in example 7, the gap bulk density (GBD) of the interposing mat members and the periphery mat member was 0.5 g/cm³.

### (Example 8)

An exhaust gas conversion apparatus including a honeycomb structural body according to example 8 was manufactured by the same method as example 1. However, in example 8, the gap bulk density (GBD) of the interposing mat members and the periphery mat member was 0.2 g/cm³.

### (Example 9)

An exhaust gas conversion apparatus including a honeycomb structural body according to example 9 was manufactured by the same method as example 1. However, in example 9, the gap bulk density (GBD) of the interposing mat members and the periphery mat member was 0.6 g/cm³.

### (Comparative example 1)

An exhaust gas conversion apparatus including a honeycomb structural body according to comparative example 1 was manufactured by the same method as example 1. However, in comparative example 1, instead of using interposing mat members, a paste for adhesive layers having a thickness of 2.0 mm was applied between the honeycomb unit fired bodies. Furthermore, paste for coat layer having a thickness of approximately 1.5 mm was applied on the peripheral surface of the assembly of honeycomb unit fired bodies.

The paste for adhesive layers was prepared by mixing together and kneading 18.1 wt% of inorganic fiber, 59.1 wt% of β-zeolite particles, 14.2 wt% of silica sol (solid content 30 wt%), 0.4 wt% of an organic binder (methylcellulose), 3.9 wt% of a water repellent agent (polyvinyl alcohol), 3.9 wt% of a surface-active agent, and 0.4 wt% of a foaming agent (alumina balloons).

The paste for coat layer was the same as the paste for adhesive layers.

The paste for adhesive layers and the paste for coat layer were dried and solidified by maintaining the assembly of honeycomb unit fired bodies in a temperature of 400 °C for 1 hour.

The periphery mat member was wound around the entire peripheral surface of the assembly of honeycomb unit fired bodies (honeycomb structural body). The periphery mat member was the same as the interposing mat members of example 1.

The assembly of honeycomb unit fired bodies (honeycomb structural body) was placed in a metal case and was degreased at 400 °C for one hour. Accordingly, an exhaust gas conversion apparatus including the honeycomb structural body according to comparative example 1 was manufactured.

### (Comparative example 2)

An exhaust gas conversion apparatus including a honeycomb structural body according to comparative example 2 was manufactured by the same method as example 1. However, in comparative example 2, in the honeycomb unit molded bodies, one end of the cells was sealed with a sealing paste. The cells were sealed such that the sealed cells form a checkered pattern at the first end face of the honeycomb structural body. At the second end face of the honeycomb structural body, the cells that are not sealed at the first end face were sealed. Thus, there were no cells that penetrate through the first end face and the second end face. The same raw material paste as that used for the honeycomb unit molded bodies was used for the sealing paste. Subsequently, the honeycomb unit molded bodies were fired to form honeycomb unit fired bodies with sealed cells. Other conditions were the same as those of example 1.

### (Evaluation tests)

The exhaust gas conversion apparatuses including the honeycomb structural bodies according to examples 1 through 9 and comparative examples 1 and 2 were left in an atmosphere at room temperature (25 °C).

Two hours later, the honeycomb structural bodies according to examples 1 through 9 and comparative examples 1 and 2 were taken out from the metal cases. The state (cracks, breakage) of the honeycomb units (honeycomb unit fired bodies) was observed.

The above evaluation test is referred to as a shelf test.

The exhaust gas conversion apparatuses including the honeycomb structural bodies according to examples 1 through 9 and comparative examples 1. and 2 were left in an atmosphere at room temperature (25 °C) for two hours. Then an air blower was used to blow air through the honeycomb structural bodies in the exhaust gas conversion apparatuses at a flow rate of 20 liters/second.

One hour later, it was visually observed whether the honeycomb units (honeycomb unit fired bodies) had shifted in the honeycomb structural bodies.

It was determined that there was no positional shift if the length by which the honeycomb unit (honeycomb unit fired body) had shifted from the edge surface of the honeycomb structural body was less than 0.5 mm.

The above evaluation test is referred to as a flow test.

A wind erosion test was performed on the exhaust gas conversion apparatuses including the honeycomb structural bodies according to examples 1 and 6 through 9.

The wind erosion test was performed by intermittently blowing an airflow having wind pressure of 0.45 MPa through the honeycomb structural body from the first end face of the honeycomb structural body in the exhaust gas conversion apparatus, while the exhaust gas conversion apparatus was kept in an atmosphere of 700 °C. The airflow was repeatedly and intermittently blown through the honeycomb structural body in the exhaust gas conversion apparatus at a cycle of 0.5 seconds (blow airflow)/1.0 seconds (stop airflow). The duration of the test was 30 minutes.

It was visually observed whether the honeycomb units (honeycomb unit fired bodies) had shifted in the honeycomb structural bodies after the wind erosion test.

It was determined that there was no positional shift if the length by which the honeycomb unit (honeycomb unit fired body) had shifted from the edge surface of the honeycomb structural body was less than 0.5 mm.

### (Evaluation results)

Table 1 indicates the evaluation test results.

**[Table 1]**

| | SEALED HONEYCOMB UNITS | NUMBER OF COMBINED HONEYCOMB UNITS | METHOD OF ASSEMBLING ASSEMBLY | MAT MEMBER GBD (g/cm³) | SHELF TEST | FLOW TEST | WIND EROSION TEST |
|---|---|---|---|---|---|---|---|
| EXAMPLE 1 | NO | 4 (2 VERTICAL ROWS × 2 HORIZONTAL ROWS) | INTERPOSE MAT MEMBERS | 0.4 | NO ABNORMALITY | NO POSITIONAL SHIFT | NO |
| EXAMPLE 2 | NO | 4 (2 VERTICAL HORIZONTAL ROWS) ROWS × 2 | INTERPOSE MAT MEMBERS | 0.4 | NO ABNORMALITY | NO POSITIONAL SHIFT | - |
| EXAMPLE 3 | NO | (2 VERTICAL ROWS × 2 HORIZONTAL ROWS) | INTERPOSE MAT MEMBERS (FIX WITH DOUBLE -SIDED ADHESIVE TAPE, WIND WIRE AROUND PERIPHERY) | 0.4 | NO ABNORMALITY | NO POSITIONAL SHIFT | - |
| EXAMPLE 4 | NO | 4 (2 VERTICAL ROWS × 2 HORIZONTAL ROWS) | INTERPOSE MAT MEMBERS (FIX WITH ADHESIVE) | 0.4 | NO ABNORMALITY | POSITIONAL SHIFT | - |
| EXAMPLE 5 | NO | 16 (4 VERTICAL ROWS × 4 HORIZONTAL ROWS) | INTERPOSE MAT MEMBERS | 0.4 | NO ABNORMALITY | NO POSTIONAL SHIFT | - |
| EXAMPLE 6 | NO | 4 (2 VERTICAL ROWS × 2 HORIZONTAL ROWS) | INTERPOSE MAT MEMBERS | 0.3 | NO ABNORMALITY | NO POSITIONAL SHIFT | NO |
| EXAMPLE 7 | NO | 4 (2 VERTICAL ROWS) | INTERPOSE ROWS × 2 MAT MEMBERS HORIZONTAL | 0.5 | NO ABNORMALI | NO TY POSITIONAL SHIFT | NO |
| EXAMPLE 8 | NO | 4 (2 VERTICAL ROWS × 2 HORIZONTAL ROWS) | INTERPOSE MAT MEMBERS HORIZONTAL | 0.2 | NO ABNORMALITY | POSITIONAL SHIFT | YES |
| EXAMPLE 9 | NO | 4 (2 VERTICAL ROWS × 2 HORIZONTAL ROWS) | INTERPOSE HORIZONTAL | 0.6 | NO ABNORMALITY | NO POSITIONAL SHIFT | YES |
| COMPARATIVE EXAMPLE 1 | NO | 4 (2 VERTICAL ROWS × 2 HORIZONTAL ROWS) | JOIN WITH ADHESIVE LAYERS (NO MAT MEMBER) | - | CRACK WAS FORMED | NO POSITIONAL SHIFT | - |
| COMPARATIVE EXAMPLE 2 | YES | 4 (2 VERTICAL ROWS × 2 HORIZONTAL ROWS) | INTERPOSE MAT MEMBERS | 0.4 | NO ABNORMALITY | SHIFT OCCURRED | - |

In examples 1 through 9, no abnormalities such as cracks were found as a result of the shelf test, and no positional shifts of the honeycomb units were found as a result of the flow test. In comparative example 1, no positional shifts of the honeycomb units were found as a result of the flow test, but a crack was found in the adhesive layer as a result of the shelf test.

In comparative example 2, no abnormalities such as cracks were found as a result of the shelf test, but positional shifts of some of the honeycomb units were found as a result of the flow test.

In the honeycomb structural body of comparative example 2, the cells are sealed at either the first end face or the second end face, and therefore it is considered that the positional shifts had occurred due to the pressure of the airflow.

As a result of the wind erosion test, it was observed that wind erosion had occurred in the exhaust gas conversion apparatus including the honeycomb structural body according to example 9 (gap bulk density (GBD) of mat member was 0.6 g/cm³) and the exhaust gas conversion apparatus including the honeycomb structural body according to example 8 (gap bulk density (GBD) of mat member was 0.2 g/cm³). Specifically, the length by which the honeycomb unit in the honeycomb structural body according to example 8 after the wind erosion test had shifted exceeded 0.5 mm and was less than or equal to 1 mm. The length by which the honeycomb unit in the honeycomb structural body according to example 9 after the wind erosion test had shifted exceeded 1 mm and was less than or equal to 2 mm.

It is considered that the positions of the honeycomb units shifted because the interposing mat members were damaged and the holding strength of the honeycomb units were reduced as a result of performing the wind erosion test.

Meanwhile, no wind erosion occurred in the exhaust gas conversion apparatus including the honeycomb structural body according to example 1 (gap bulk density (GBD) of mat member was 0.4 g/cm³), the exhaust gas conversion apparatus including the honeycomb structural body according to example 6 (gap bulk density (GBD) of mat member was 0.3 g/cm³), or the exhaust gas conversion apparatus including the honeycomb structural body according to example 7 (gap bulk density (GBD) of mat member was 0.5 g/cm³). Specifically, the length by which the honeycomb units in the honeycomb structural bodies according to examples 1, 6, and 7 after the wind erosion test had shifted were less than 0.5 mm.

The above results show that the gap bulk density (GBD) of the interposing mat members is preferably within a range of 0.3 g/cm³ through 0.5 g/cm³ in consideration of resistance to wind erosion.

## Claims

1. A honeycomb structural body comprising:
honeycomb units that are pillar-shaped and bound together, each of the honeycomb units including plural cells extending from a first end face to a second end face in a longitudinal direction, the plural cells being partitioned by cell walls, wherein
the honeycomb units include phosphate-based zeolite and a second inorganic binder, and
the honeycomb units are interposed by mat members including a first inorganic fiber.

2. The honeycomb structural body according to claim 1, wherein
the first inorganic fiber included in the mat members includes at least one kind selected from a group consisting of alumina, silica, silica-alumina, and mullite.

3. The honeycomb structural body according to claim 1 or 2, wherein
the mat members have a gap bulk density (GBD) within a range of 0.2 g/cm³ through 0.6 g/cm³.

4. The honeycomb structural body according to any one of claims 1 through 3, wherein
the mat members have surface pressure within a range of 0.3 MPa through 3.5 MPa.

5. The honeycomb structural body according to any one of claims 1 through 4, wherein
the phosphate-based zeolite includes at least one kind selected from a group consisting of SAPO, MeAPO, and MeAPSO.

6. The honeycomb structural body according to claim 5, wherein
the SAPO includes at least one kind selected from a group consisting of SAPO-5, SAPO-11, and SAPO-34.

7. The honeycomb structural body according to any one of claims 1 through 6, wherein
the phosphate-based zeolite has undergone ion-exchange.

8. The honeycomb structural body according to any one of claims 1 through 7, wherein
the second inorganic binder includes at least one kind selected from a group consisting of alumina sol, silica sol, titania sol, liquid glass, sepiolite, attapulgite, and boehmite.

9. The honeycomb structural body according to any one of claims 1 through 8, wherein
the honeycomb units further include a second inorganic fiber or inorganic flaky substances.

10. The honeycomb structural body according to claim 9, wherein
the second inorganic fiber included in the honeycomb units includes at least one kind selected from a group consisting of alumina, silica, silicon carbide, silica-alumina, glass, potassium titanate, and aluminum borate, and
the inorganic flaky substances included in the honeycomb units include at least one kind selected from a group consisting of glass flakes, mica flakes, alumina flakes, silica flakes, and zinc oxide flakes.

11. The honeycomb structural body according to any one of claims 1 through 10, wherein
the mat member including the first inorganic fiber is disposed on a peripheral surface of the honeycomb units that are bound together.

12. A method of manufacturing a honeycomb structural body including honeycomb units that are pillar-shaped and bound together, each of the honeycomb units including plural cells extending from a first end face to a second end face in a longitudinal direction, the plural cells being partitioned by cell walls, the honeycomb units including phosphate-based zeolite and a second inorganic binder, the method comprising:
(a) a step of manufacturing honeycomb unit molded bodies having a predetermined shape;
(b) a step of assembling the honeycomb unit molded bodies to form an assembly of the honeycomb unit molded bodies having the predetermined shape and interposing mat members including a first inorganic fiber between the honeycomb unit molded bodies; and
(c) a step of firing the assembly of the honeycomb unit molded bodies.

13. The method according to claim 12, wherein
the step (b) further includes a step of disposing the mat member including the first inorganic fiber on a peripheral surface of the assembly of the honeycomb unit molded bodies.

14. A method of manufacturing a honeycomb structural body including honeycomb units that are pillar-shaped and bound together, each of the honeycomb units including plural cells extending from a first end face to a second end face in a longitudinal direction, the plural cells being partitioned by cell walls, the honeycomb units including phosphate-based zeolite and a second inorganic binder, the method comprising:
(a) a step of manufacturing honeycomb unit molded bodies having a predetermined shape;
(b) a step of firing the honeycomb unit molded bodies to manufacture honeycomb unit fired bodies after step (a); and
(c) a step of assembling the honeycomb unit fired bodies to form an assembly of the honeycomb unit fired bodies having the predetermined shape and interposing mat members including a first inorganic fiber between the honeycomb unit fired bodies after step (b).

15. The method according to claim 14, wherein
the step (c) further includes a step of disposing the mat member including the first inorganic fiber on a peripheral surface of the assembly of the honeycomb unit fired bodies.

16. The method according to any one of claims 12 through 15, wherein
the phosphate-based zeolite includes at least one kind selected from a group consisting of SAPO, MeAPO, and MeAPSO.

17. The method according to claim 16, wherein
the SAPO includes at least one kind selected from a group consisting of SAPO-5, SAPO-11, and SAPO-34.

18. The honeycomb structural body manufactured by the method according to any one of claims 12 through 17.
